# EUROPEAN PATENT SPECIFICATION

(11) **EP 1 018 090 B1**
(45) Date of publication and mention of the grant of the patent: **04.12.2002**
(21) Application number: 98949520.5
(22) Date of filing: 25.09.1998
(51) Int. Cl.: G06K 7/12

(54) **LATENT ILLUMINANCE DISCRIMINATION MARKER AND SYSTEM FOR DATA STORAGE CARTRIDGES**
UNTERSCHEIDUNGSMARKIERUNG MIT LATENTER BELEUCHTUNGSSTÄRKE UND SYSTEM FÜR DATENSPEICHERKASSETTEN
MARQUEUR ET SYSTEME DE DISTINCTION D'ECLAIREMENT LATENT POUR CARTOUCHES DE STOCKAGE DE DONNEES

(30) Priority: 26.09.1997 US 936970
(43) Date of publication of application: 12.07.2000
(73) Proprietor: IOMEGA CORPORATION, Roy, Utah 84067 (US)
(72) Inventor: THOMAS, Fred, C., III, Ogden, UT 84403 (US); DIXON, Glenn, B., West Point, UT 84015 (US); SHELTON, Todd, R., Syracuse, UT 84075 (US); GRAVES, Todd, L., Garland, UT 84312 (US); BRACKEN, Allen, T., Layton, UT 84067 (US)
(74) Representative: Desrousseaux, Grégoire Marie
(86) International application number: PCT/US98/20131
(87) International publication number: WO 99/016009

(56) References cited:
- EP-A- 0 716 102
- WO-A-97/10307
- GB-A- 1 232 570
- US-A- 3 412 245
- US-A- 4 047 033
- US-A- 4 058 732
- US-A- 4 297 584
- US-A- 4 442 170
- US-A- 4 571 085
- US-A- 4 650 320
- US-A- 5 029 034
- US-A- 5 270 854
- US-A- 5 329 127
- US-A- 5 351 268
- US-A- 5 414 266
- US-A- 5 548 106
- US-A- 5 576 110
- US-A- 5 604 006

## Description

### FIELD OF THE INVENTION

The present invention relates to a method and an apparatus for checking the authenticity of an object.

### BACKGROUND OF THE INVENTION

Disk drives for receiving removable disk cartridges, including conventional 3.5 inch floppy disk drives, must have some mechanism for detecting the insertion or presence of a disk cartridge in the drive. The actuator that carries the recording heads of the disk drive across the recording surfaces of the disk should not be allowed to move unless the presence of an appropriate disk cartridge which is non-drive damaging is detected. The removability feature requires that the disk drive have a cartridge insertion opening into which foreign objects can be inserted. If these objects physically engage the drive as a legitimate cartridge would, then the heads could be loaded onto or into the foreign object, thereby destroying the drive. Also, the spindle motor of the disk drive will be activated by a falsely detected foreign object, thereby generating particle debris. In the prior art, mechanical switches are typically employed to detect the presence of a disk cartridge within the drive. Such switches are typically positioned such that when a disk cartridge is inserted fully into the drive, the cartridge contacts the switch, thereby providing an indication that the disk cartridge is present.

"RETROREFLECTIVE MARKER FOR DATA STORAGE CARTRIDGE", U.S. Patent 5,638,228, to Thomas, III, describes the reflection of a highly concentrated quasi circular lobe of light whose spread on reflection is captured by the aperture of a phototransistor in close proximity to a light emitting diode (LED). This emitter/detector pair is in the drive and a retroreflective array is on the cartridge. The desired light lobe size is provided by the geometric size of the retroreflector array elements relative to the spacing of the emitter and the detector in the drive. Due to this physical size matching and the fact that retroreflectors are used, this marker on the cartridge is quite insensitive to cartridge tilt and distance from the emitter/detector pair in the drive.

Recently, very small mini-cartridges have been developed for use in miniature disc drives. These mini-drives are incorporated into hand-held devices such as digital cameras, electronic books, global positioning systems, cellular phones and the like. "INTERCHANGEABLE CARTRIDGE DATA STORAGE SYSTEM FOR DEVICES PERFORMING DIVERSE FUNCTIONS", Serial No. 08/746,085, filed November 6, 1996, Edwards, *et al*. (Attorney's Docket IOM-9319) describes such mini-cartridges, mini-drives, and hand-held devices.

As disk storage products become smaller and smaller, the need for a cartridge marker of thinner physical size is required. In very thin disk drives where the distance between the cartridge tag and the optical sensing device is very small (e.g., 1 mm), the inherent reflective gain mechanism obtained with a retroreflector over a diffuse or specular reflector is lost. Holographic directional light control is possible, but due to the very small working distances the ability for false engagement of the drive is significantly increased with that approach.

The ability to discriminate between cartridge types after insertion into a data storage device but prior to putting the read/write heads on the recording media is of significant value and utility. Principally this utility comes from the ability to detect the difference between various capacities or generations of data storage cartridges in a downward media compatible data storage drive. This discrimination capability allows for drive/media specific adjustments to be made such as media rotation rate, data channel rates, location of Z track for initial seeking, or even mechanical adjustment in the drive like the active engagement of new crash stop locations. The ability of a disk drive to predetermine the type/generation of data storage cartridge inserted into it prior to enabling the spin-up and engagement of read/write elements also provides the drive system designer with new possibilities for cross-platform interchangeability.

A "caddy" cartridge, as mentioned in the aforementioned Edwards, *et al.* application provides cross drive platform compatibility, for example between mini-cartridges and personal computer cartridges. The ability to recognize the installation of a "caddy" into the drive prior to spinning up of the "caddy" and loading of heads is necessary. Again rotational speed adjustments, Z track location information, data channel rate and crash stop/ID and OD data track location information must be determined prior to read/write head loading. This invention provides a solution of these problems also.

Another problem associated with the detection of LED light reflected from any reflective material is the occurrence of illuminance hot spots or structure in the LED output which often results in uneven illumination of the cartridge marker. Reflective cartridge markers can also become faded, scratched, or soiled. These factors combine to make the amplitude of the detected light signal highly variable.

Recently, in various industries such as the distribution industry, phosphors have been used in the control of goods by means of bar codes, and furthermore, bar codes are printed on various prepaid cards and passing cards, and these bar codes are read by optical reading apparatuses such as scanners to perform the desired actions. Moreover, various attempts have been made to apply forgery preventive means to credit cards and prepaid cards or to detect forged cards. For example, the marks such as bar codes are printed with an ink containing a phosphor by offset printing or by using an ink ribbon to form latent image marks. The latent image marks are irradiated with a semiconductor laser beam to excite the phosphor and the light emitted from the phosphor is received to read the bar code information by an optical reading apparatus. These techniques use the content or spectral shift from the irradiating light source for identification.

US-A-4 442 170 discloses a security paper with narrow band luminescing authentication characteristics which can only be excited in substantially the same wavelength region where it also emits. Thus, the emission is swamped by the excitation light. These characteristics are obtained by quasi-resonant luminescence, that is by an effect similar to resonant fluorescence of gases. It is suggested in this document to move the security paper immediately after flashing it, so as to detect in a photodiode field reflected light. This document indicates that decay time is particularly hard to measure for quasi-resonance; however, it still indicates how to measure decay time, by providing a light screen between the flash lamp and the photodiodes. This document is believed to be the closest prior art to the invention.

US-A-5 029 034 discloses a computerized video renting system, and suggests providing on the tape cassettes an integral counting device, for counting the number of times the record is played. In one embodiment, the count is displayed under the form of a bar code by a LED array. This document does not suggest any phosphorescent material.

US-A-5 329 127 discloses a method of identifying different plastics, by using fluorescent dyes which differ in terms of their emission frequencies, or in terms of the duration of their fluorescence. Thus, a fluorescence pattern may be assigned to each plastic. The pattern is distinguishable by the duration of the fluorescence and/or by the frequencies. The examples of this document simply suggest measuring duration of fluorescence, but do not suggest any threshold.

US-A-5 548 106 discloses an apparatus for authenticating articles, such as data storage cards. An article bears two kinds of information : the existing stored data, coded in magnetic or visible optical form, and additional indicia for the purpose of identification. These indicia are not visible when illuminated by light visible only in the visible spectrum. There is providing in the authenticating apparatus a source of non-visible light at a frequency above 10,000 Hz, and a detector of fluorescent light excited by that light source.

Although the art of detecting and discriminating between data storage cartridges is well developed, there remain some problems inherent in this technology, particularly when the distance between the cartridge tag and the optical sensing device is between about 1 mm and about 15 mm. Therefore, a need exists for a tag that produces reliable detection and discrimination between data storage cartridges under varying gain and marker spacings.

### SUMMARY OF THE INVENTION

The invention is defined in independent claims 1, 5, 12 and 26. Additional features or variants are diclosed in dependent claims.

The foregoing and other aspects of the present invention will become apparent from the following detailed description of the invention when considered in conjunction with the accompanying drawings.

### BRIEF DESCRIPTION OF THE DRAWINGS

Fig. 1 shows an exemplary data storage cartridge;
Fig. 2 is a perspective view of a device in which the cartridge is used;
Fig. 3A is an exemplary latent illuminance output spectrum for a tag;
Fig. 3B is a diagram of exemplary decay rates for exemplary tag materials;
Fig. 3C is an exemplary decay pattern for a tag;
Figs. 4A and 4B show a plan view and an exploded perspective view, respectively, of a marker tag;
Fig. 5 shows a block diagram of an exemplary system in accordance with the present invention;
Figs. 6A and 6B show the time domain operation of an exemplary system which is not in accordance with the present invention;
Figs. 7A to 7C respectively show top, side and edge views of an emitter/detector pair positioned in the drive to detect the latent illuminance marker;
Figs. 8A to 8D respectively show top, edge, and side views and an electrical schematic of an emitter/detector system suitable for use in the drives;
Figs. 9A to 9D show the discriminatable illuminance states using a LED/detector system such as that of Figs. 8A to 8D;
Figs. 10A and 10B show spectral distribution for typical near-IR LEDs and visible LEDs, respectively;
Fig. 11 shows the spectral responsivity (normalized) of a conventional silicon photosensor;
Fig. 12 shows a typical transmission curve for a ytterbium oxide filter;
Fig. 13 shows a block diagram of a further exemplary system in accordance with the present invention; and
Fig. 14 shows a block diagram of a further exemplary system which is not in accordance with the present invention.

### DESCRIPTION OF EXEMPLARY EMBODIMENTS AND BEST MODE

The present invention is directed to method or apparatus using a latent illuminance marker (hereinafter also referred to as a tag) to identify and discriminate the type of object or article that has been inserted into a detector or reader system. The present invention provides an optical detection mechanism so that it can be ascertained with near certainty that an inserted object is an appropriate or authentic object. The tag system is a highly effective discriminant of objects and articles and can also be used to prevent unauthorized copies of objects and articles from being easily reproduced and used with associated detectors and readers. It should be noted that the term "illuminance" as used herein includes, but is not limited to, irradiance and the spectrum of light including ultra-violet (UV), visible, and near infrared.

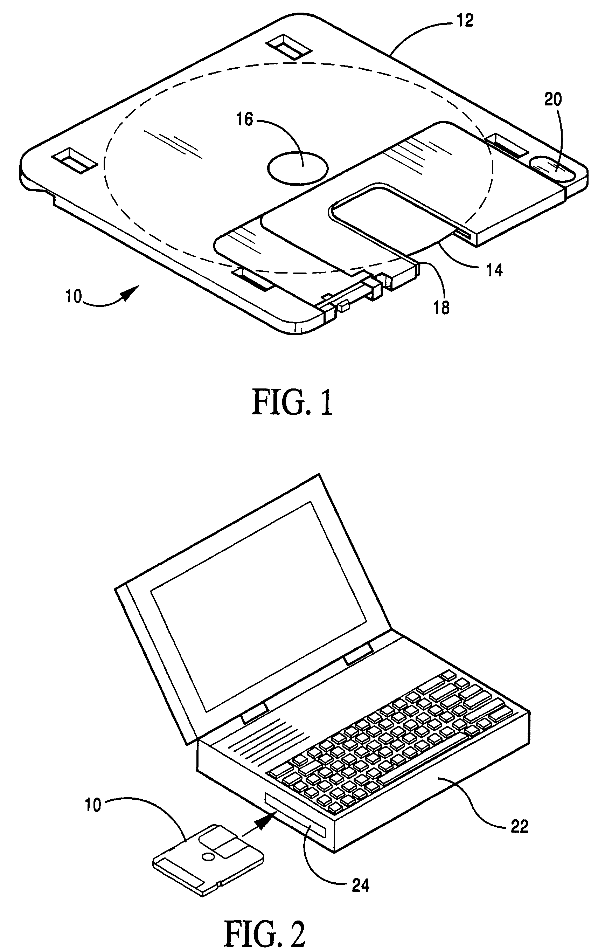

Figs. 1 and 2 show a cartridge and a disk drive to which the present invention is applicable. The cartridge and drive are described in the co-pending application entitled "INTERCHANGEABLE CARTRIDGE DATA STORAGE SYSTEM FOR DEVICES PERFORMING DIVERSE FUNCTIONS", Serial No. 08/746,085, filed November 6, 1996 (Attorney Docket No. IOM-9319), which is now US-A-5809520.

The disk cartridge 10 comprises an outer casing 12 and a disk-shaped recording medium 14 which is affixed to a hub 16 that is rotatably mounted in the casing 12. An opening on the bottom shell of the casing 12 provides access to the disk hub 16. A head access opening in the front peripheral edge 18 of the disk cartridge 10 provides access to the recording surfaces of the disk by the recording heads of a disk drive.

A latent illuminance marker, or tag, 20 is positioned on the disk cartridge 10 to be detected by a detector in a disk drive.

Fig. 2 shows a laptop computer 22 which has a disk drive 24 for receiving the disk cartridge 10 of Fig. 1. The drive 24 may be the Iomega ZIP drive which is disclosed and claimed in the U.S. patents identified in U.S. Patent 5,638,228.

The latent illuminance marker 20 on the cartridge 10 is desirably very thin in order for the cartridge to fit in the thin form factor of the drive. A phosphorescent material is used in the embodiments of this invention. The latent illuminance material in accordance with the invention can comprise either a Stokes phosphor or an anti-Stokes phosphor. A Stokes phosphor is a frequency down converter in which the material is excited with a shorter wavelength or higher frequency light which results in the emission of light of various wavelengths which are longer in wavelength and lower in frequency. An example of a Stokes phosphor is one which is excited with a light of about 660 nm and emits latent irradiance at between about 680 and about 800 nm. An anti-Stokes phosphor is a frequency up converter in which the material is excited with a longer wavelength or lower frequency light which results in the emission of light of various wavelengths which are shorter in wavelength and higher in frequency. Materials of this type are often used for the detection of infrared radiation.

A latent illuminance tag can be attached to a data storage cartridge as a sticker, or printed into a, or applied via suspension in an adhesive compound such as a UV curable epoxy onto a data storage cartridge. On each disk cartridge having an authorized copy of the software, there is a tag which is preferably coated with a phosphorescent photoluminent material which serves to identify the type or generation of disk cartridge and distinguish it from other types of disk cartridges and purely passive light reflectors.

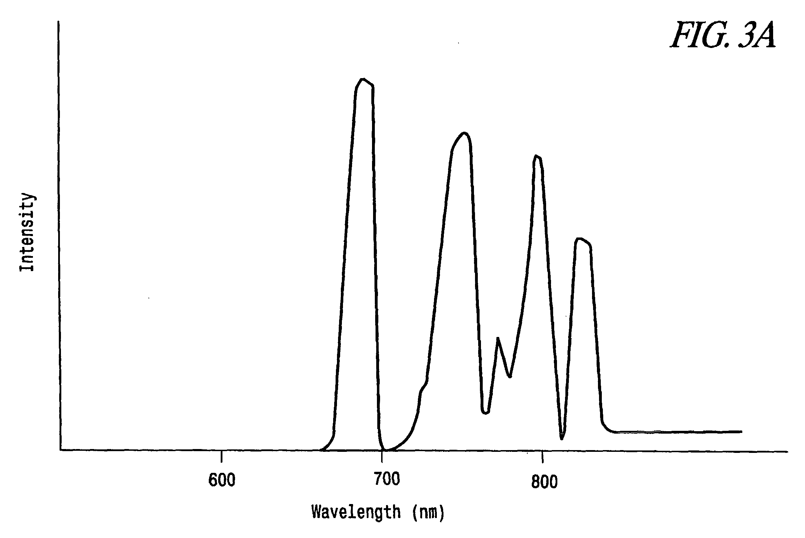

The phosphor type materials used in the phosphorescent tag fluoresce for a period of time after a light source, preferably an LED, that has illuminated the tag is turned off. The LED strikes the tag at an excitation wavelength and the light emitted from the tag has a wavelength (or wavelengths) that is shifted from the excitation wavelength. The wavelength(s) can be shorter or longer than the excitation wavelength. As described above, the light emission from the tag is called phosphorescence. An exemplary latent illuminance output spectrum for a tag is shown in Fig. 3A. The output spectrum is characteristic of the material that comprises the tag. The intensity of the illuminance (light) emitted at at least one of the wavelengths (e.g., about 680 nm) can be monitored to measure a decay time, as described below.

Preferably, the latent illuminance material is excited with light close to a single wavelength (e.g., about 660 nm). The latent irradiance emitted by the latent illuminance material can be at a single wavelength, or at a spectrum of wavelengths (e.g., between about 680 and about 800 nm). In the latter case, the signal used to determine the decay period (hereinafter also referred to as a decay time or time constant) is measured as the aggregate of the spectrum of wavelengths being detected by the sensor.

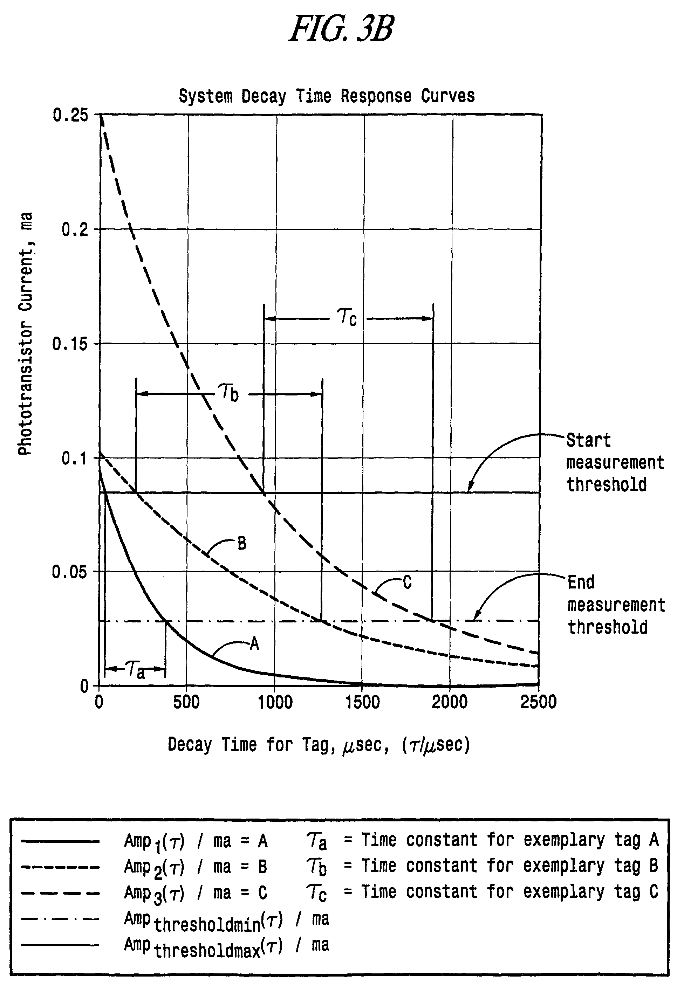

The tag will emit illuminance (light) in accordance with the output spectrum for a period of time after being illuminated with a light source. The decay time for the emitted illuminance ranges from sub-microseconds to several minutes, and preferably between about 50 µsec and about 1 sec, and more preferably between about 50 µsec and about 3,000 µsec, depending on the material that is phosphorescing and the wavelengths that are being monitored. A decay time constant used to specify the tag is the time it takes for the latent irradiance to decay to some fraction or percentage, such as 37%, of its initial value. In accordance with a preferred embodiment, the decay in irradiance takes the form e^{-t/(T/X)} where T is the decay time constant for a predetermined amount of decay, X is a predetermined constant that preferably ranges between about 0.36 and about 2.3, and t is elapsed time from when the charging LED is turned off, or the elapsed time for the decaying signal level to pass from a first predetermined magnitude or intensity level through a second lower level which fixed and predetermined, and is preferably a predetermined percentage below the first magnitude level, but can be a predetermined percentage below the initial value. For example, for a decay of about 30% of the initial latent illuminance, X is about 0.36. Fig. 3B illustrates this decay for three different exemplary tag materials, A, B, and C, as a graph of phototransistor current versus decay time for the tag. As described below, a phototransistor or photodiode are the preferred detectors used to detect the emitted illuminance from a tag.

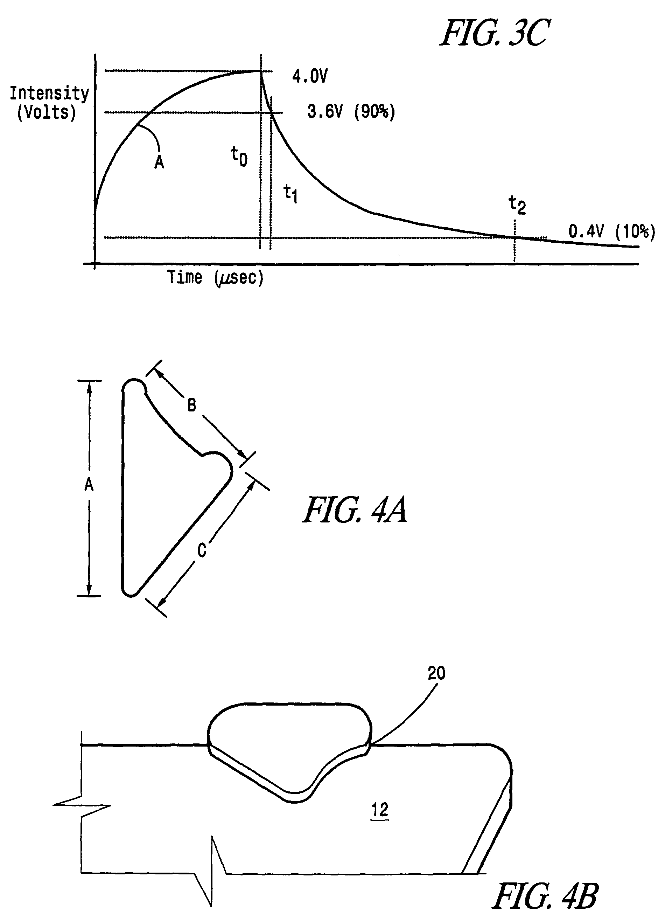

Fig. 3C shows an exemplary decay pattern for a tag. The intensity is measured for a predetermined wavelength. As the tag is being illuminated (charged) by the LED light source, it begins to emit illuminance, as indicated by line A. The LED light source is turned off at time t₀, and the tag thereafter emits latent illuminance from an initial peak value, such as about 4.0 volts, to a low value, ultimately approaching about 0 volts. The decay time is measured between two or more thresholds, such as between 90% and 10% of the initial value; i.e., the time between about 3.6 volts and 0.4 volts, or t₂ - t₁. This decay from the initial 3.6 volt threshold level to a 0.4 volt threshold level illustrates an embodiment where about an 89% decay time is measured (100*(3.6-0.4)/3.6). The measured decay time is compared with a predetermined decay time to determine whether or not the data storage cartridge or disk that has been inserted in the disk drive is appropriate for use with the disk drive. If so, the read/write heads of the disk drive are then able to engage the disk without risk of damage. Moreover, the data storage cartridge can be identified as a particular type or generation, and the disk drive can engage it accordingly. Although the preferred embodiment is directed to an exponential decaying latent illuminance material, it is also appreciated that latent illuminance materials with a decay which is the sum of a plurality of differently weighted exponential decays can also be used with the present invention.

In the present invention, the system measures the latent illuminance times between two pairs of thresholds in order to ensure greater accuracy in authentication and validation and to eliminate a linear response that emulates the exponential decay. Each pair of thresholds is preferably the same percentage decrease in intensity. In one example, a first pair of thresholds is 90% and 60%, or the time it takes the latent illuminance intensity to decrease from 90% to 60%, which is a decrease in intensity of 33% or one-third. The second exemplary pair of thresholds is 60% and 40%, which is also a decrease in intensity of 33% or one third. The irradiant decay is timed between the first and second thresholds, and the second and third thresholds. The time it takes for the illuminance to decrease between the first set of thresholds should be approximately equal to the time it takes the illuminance to decrease between the second set of thresholds because the percentage decrease in intensity is the same between the two pairs of thresholds. With an exponential decay, the times are approximately equal. If these two times are approximately equal, then it is known that the detected light is being emitted from something having a decay time similar to the authentic tag. For further validation purposes, the time can be compared to a predetermined time to further ensure that the tag is authentic or valid. Thus, a means for verifying that the decay rate being measured is truly of exponential form and not linear is provided.

It should be noted that the two pairs of thresholds do not have to be equally spaced in percentage decline in intensity, but can be chosen to have any predetermined level of intensity change. In such a case, the decay times between thresholds can still be compared to each other for an appropriate ratio, and/or the decay times can be compared to a predetermined time or times to authenticate or validate the data storage cartridge. Moreover, additional thresholds and measurements can be added for even further authentication and validation accuracy. Preferably, a value below the initial illuminance value is used as a starting point, and a value above zero is used as an ending point, in order to reduce or eliminate the effects of tag age and manufacturing tolerances.

Any material or combination of materials exhibiting latent illuminance properties or characteristics can be used as the latent illuminance material in accordance with the present invention, including any phosphor or combination or blend of phosphors. Preferred phosphors include rare-earth phosphors including oxides, oxysulfides, silicates, and alumites as well as other photoluminent materials and compounds. There are many combinational possibilities for photoluminent materials. Most preferably, a phosphor tag for use in accordance with the present invention is manufactured by Sarnoff Corporation, Princeton, New Jersey.

The tag is preferably a pressure sensitive adhesive (PSA) sticker. The desired phosphorescent material or compound is preferably suspended in an optically clear binder which is coated/printed on the sticker substrate (e.g., white vinyl). PSA with a protective liner is applied to the back side of the sticker substrate.

The compound can alternatively be used as a plastic filler for injection molded parts/tags or blended with inks for printing, or applied via suspension in an adhesive compound such as UV curable epoxy, or using any other suitable method. Parts requiring identification and discrimination can be either molded, printed onto, or tagged with a phosphorescent material or compound.

It is desirable that with ordinary handling and abrasion the tag will not flake, peel or otherwise be damaged in a manner to adversely affect its performance or generate debris which could adversely affect a disk drive's performance. Moreover, preferably, the tags are operational from about -20 to about 65°C (about -4 to about 149°F) and have a functional life of at least 15 years. Thus, inorganic phosphors are preferred as the phosphorescent material.

The latent illuminance emitted from the tag is sensed by a photodetector to provide the tag type discrimination and desirably has as high a conversion efficiency as possible. In other words, the latent illuminance should have as high a latent irradiance conversion efficiency (LICE) as possible. LICE is the percentage of excitation light hitting the tag that is converted to latent illuminance/light. Moreover, the latent illuminance is preferably irradiated from the tag in a diffuse, spherical manner, equal in all directions.

The tag can be any size or shape that fits on the disk cartridge, with the thickness, or ink thickness if printed, preferably less than about 0.5 mm and a thickness tolerance of about ±0.05 mm. Fig. 4A shows the preferred physical dimensions of the tag implementation for a cartridge application, with dimensions: A equals approximately 1.2 cm, B equals approximately 0.9 cm, and C equals approximately 1.0 cm. The sheet tolerance for the tag illustrated in Fig. 4A is about ±0.13 mm. Fig. 4B shows an exploded perspective view of the tag 20 on the outer casing 12 of the disk cartridge.

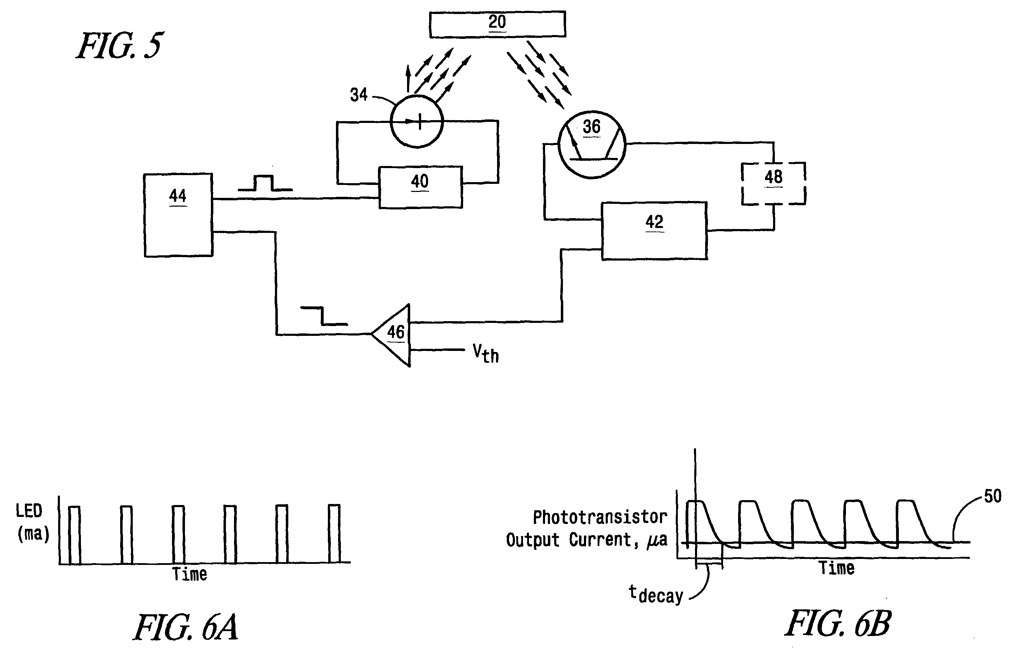

In a preferred embodiment, the disk drive has an emitter/detector pair that is used for interrogation of the latent illuminance tag. Fig. 5 shows a block diagram of an exemplary system in accordance with the present invention. A light source 34, preferably an LED, illuminates a latent illuminance tag 20 and is then turned off. The LED 34 is driven by LED switching and current limiting electronics 40, and a microprocessor 44 which sends pulse commands to the electronics 40. The tag 20 emits illuminance, having an initial intensity value at a particular wavelength or wavelengths, which is detected by a detector 36, preferably a phototransistor or photodiode. Preferably, the detector 36 waits a predetermined time, such as about 10 µsec, after the LED is turned off before beginning measurement of the latent illuminance at the particular wavelength(s) from the tag. Gain, preferably 100X, is applied to the output of the phototransistor or photodiode 36 by a gain stage 42. The output of the gain stage 42 is provided to a comparator 46 which compares the emitted illuminance with a threshold Vth. The results of the comparison are provided to the microprocessor 44 which measures the timing, determines the decay rate or time, and identifies the disk cartridge for validation, as described above. Element 48 contains optional filters that are described below with respect to further embodiments.

In an arrangement which does not fall within the scope of the claims, when a data storage cartridge is inserted into a disk drive, the light source 34, preferably an LED, emits a short intense pulse of light. The light can be one pulse or a continuous cycle of pulses. Moreover, the detection circuitry optically pumps the phosphorescent tag with the light source and measures and compares a phase lag between the drive signal and the decay illuminance. This provides a measure of the decay time constant. Figs. 6A and 6B show an exemplary LED duty cycle and its corresponding latent illuminance decay profile at a phototransistor or photodiode output, respectively, for a pulsed LED. The bounded decay time, t_{decay}, provides the information that is desirably used to discriminate between a plurality of tags. Line 50 shows the threshold for decay time detection.

LEDs are capable of handling large current surges for short periods to generate bright flashes of light. The outputted LED light illuminates the latent illuminance tag 20 and thereby excites atoms or ions which emit light as they decay to lower energy levels. The phosphor type materials used in the preferred latent illuminance tag 20 fluoresce for a period of time after the LED 34 is turned off. The photonic sensor 36 is in close proximity to the LED 34. This sensor 36 is initially saturated by the emitted light from the tag 20, preferably significantly above the high detection threshold level such that component life and manufacturing tolerances are accommodated (i.e., do not significantly affect the performance of the device). Once the LED 34 is turned off, the disk drive microprocessor 44 or a functionally similar system monitors the output of the photonic sensor 36 and, in an exemplary embodiment, determines the decay time required for the latent illuminance or phosphorescence to fall through two predetermined thresholds, thus establishing the desired decay rate. The decay time measured by the drive microprocessor 44 provides information by which the drive can determine which generation or type of cartridge has been inserted. It is noted that alternate embodiments establish a decay rate to identify the cartridge based on the time required for the latent illuminance or phosphorescence to fall through multiple thresholds, such as two sets of two predetermined thresholds.

The thresholds are preferably fixed, predetermined values, but it is understood that the microprocessor could measure the initial intensity value of the latent illuminance and, based on the initial value, determine the thresholds and expected decay times. Moreover, the thresholds could be fixed intensity values (e.g., about 3.0 volts and about 1.0 volts) determined independently, and not determined responsive to a percentage of the initial value or any other threshold.

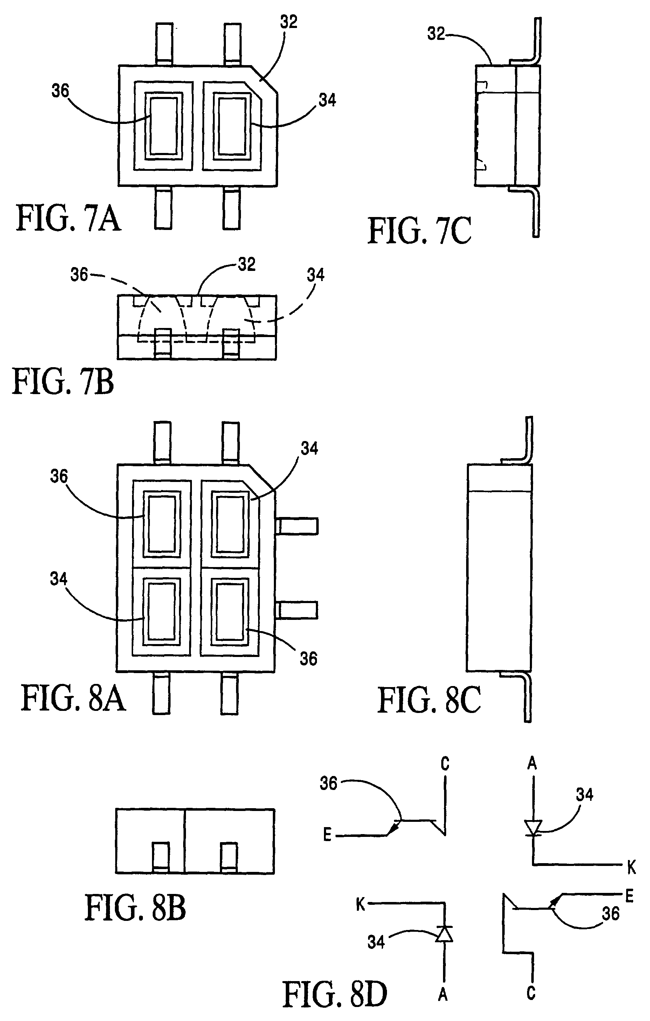

As described, the emitter is a light source, preferably an LED, and the detector is a photosensor or photodetector, preferably a phototransistor or photodiode. Figs. 7A to 7C show the layout of a suitable emitter/detector pair 32 which includes LED 34 and phototransistor or photodiode 36. The tag 20 (shown in Fig. 5) is illuminated with the LED 34, and the output of the phototransistor or photodiode 36 is sampled at regular time intervals to determine the decay signature or time constant for the decay.

The tag can be illuminated with a single color LED or multiple colors (i.e., two or more colors at the same time), depending on the composition of the latent illuminance material compound in the latent illuminance tag. For example, in one embodiment, the emitter is a three color LED which illuminates the latent illuminance tag with three colors, for example, red (630 nm), green (560 nm) and orange (605 nm) wavelengths because the tag comprises at least one material, such as phosphor, responsive to one of these wavelengths, and may be a phosphor compound comprising more than one material that is responsive to these wavelengths. The decay signature, or signatures in combination, are used to identify the cartridge as having a valid latent illuminance tag. It should be noted that there are numerous wavelengths of LEDs from the blue to the near-IR in the photonic spectrum that are technologically and economically feasible.

The addition of more than one emitter/detector pair allows for emission and detection of multiple wavelengths or colors from the latent illuminance tag, thereby providing cartridge type discrimination. Figs. 8A to 8D depict an emitter/detector system which includes two detectors 36 and two emitters 34. Fig. 8D depicts the electrical components with the legends E for emitter, C for collector, A for anode, and K for cathode. The "emitter/detector system" includes two light detectors (phototransistors and/or photodiodes) 36 which have different color filtering transmissive windows in front of them and two LED light sources of differing wavelength.

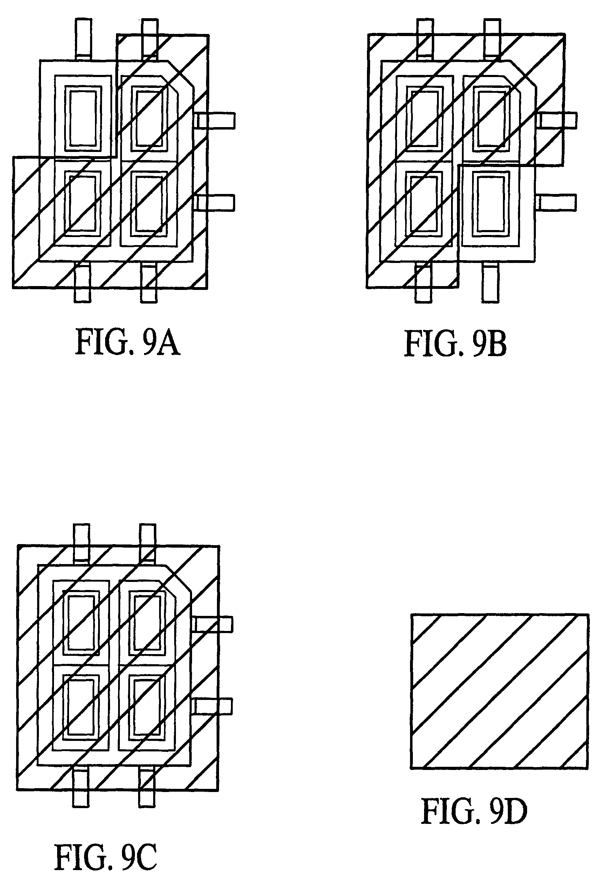

Figs. 9A to 9D illustrate the three possible detectable or discriminatable states using the two detectors. It should be noted that the detectors can be oriented in any configuration. State 1 is shown in Fig. 9A, state 2 in Fig. 9B and state 3 in Fig. 9C. Fig. 9D shows the legend for the emitters and detectors that are active in Figs. 9A to 9C. An example of the application of this three state system would be in a future higher capacity ZIP drive. "State 1" would alert to the insertion of a ZIP 100 cartridge, "State 2" would alert to the insertion of a ZIP 200+ cartridge, and "State 3" would alert to the insertion of a third type of cartridge.

Addition of a third detector element and a third emitter allows for the detection and discrimination of seven possible states based on material emission wavelength. Any number of multiple arrayed detectors and emitters provide an exponentially increasing number of discriminatable states based on material emission wavelength. Taking ratiometric measurements between the sensors allows for even more detectable states and improved discrimination.

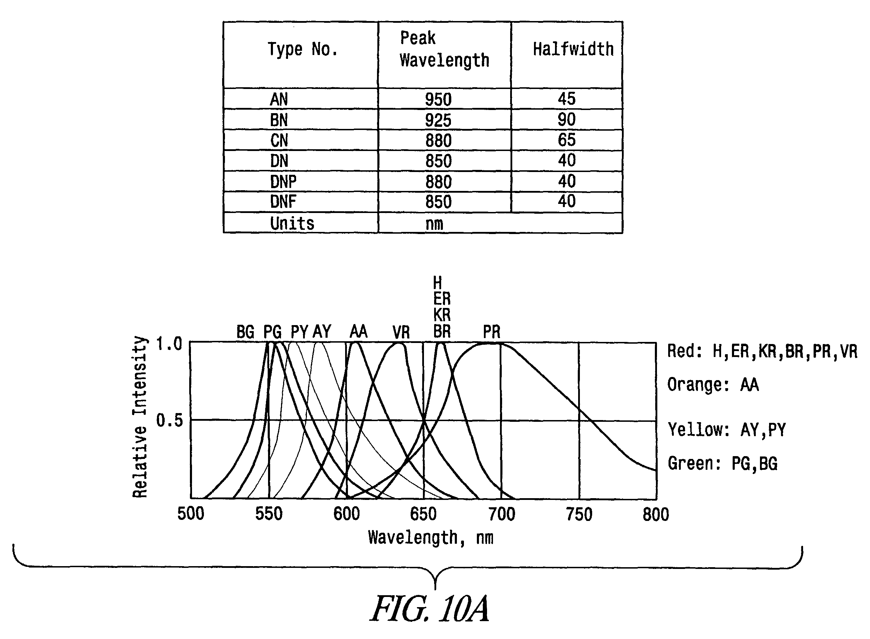

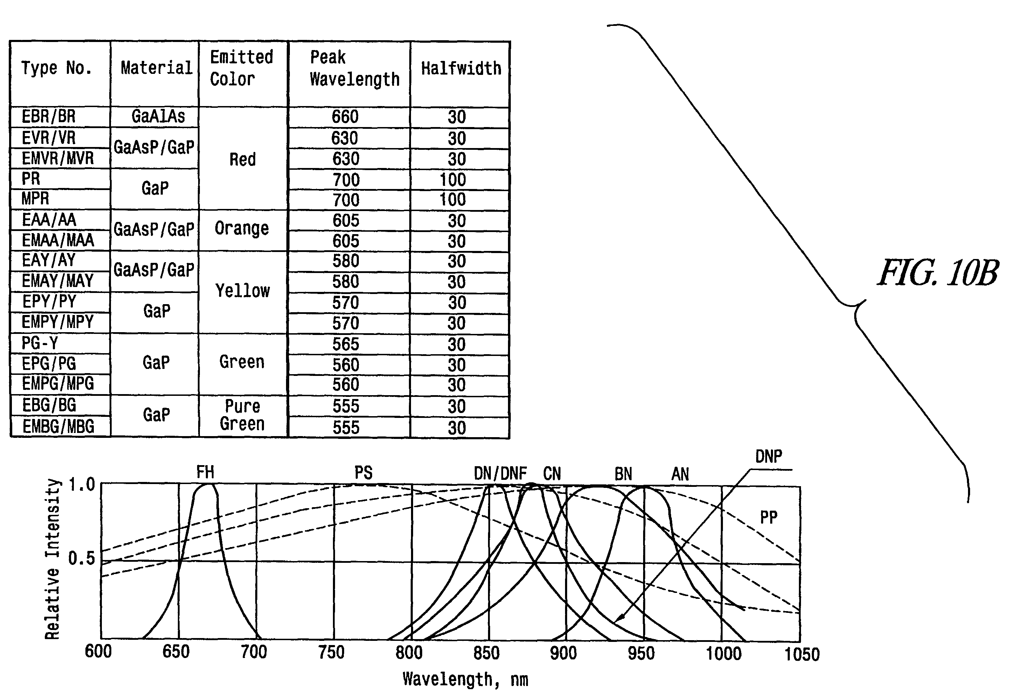

The excitation wavelength for the latent illuminance tag is preferably a standard LED emitting wavelength. Exemplary center wavelengths and their FWHM spectral bandwidths in order of preference are as follows: 670 nm (30 nm), 605 nm (30nm), 580 nm (30nm), and 560 nm (30 nm). Figs. 10A and 10B show spectral distribution for typical near-IR LEDs and visible LEDs, respectively, which are also possible excitation sources.

The distance between the tag and the excitation light source is preferably in the range between about 1 mm and about 15 mm.

It is desirable to minimize the spin-up time for the disk drive. Minimization of the spin-up time dictates the time duration of excitation irradiance and light source current draw limits. If the cartridge type verification is to take place prior to drive spin-up, the current through the device can be relatively high, but the duration is preferably short to minimize protraction of spin-up time. Alternatively, the excitation and detection process could occur during motor spin-up which takes about a second; however, due to the high current demands of this process, the available current for tag excitation is limited.

Any light source can be used that puts out light sufficient to energize the latent illuminance tag or marker and can be quickly turned off (e.g., an LED having 30 ma maximum at 50% duty cycle (periods < 1 second) or power equivalents).

Low cost physically compact commercially available packages which include both an LED irradiance source and a phototransistor or photodiode (photonic sensor) such as the Sharp GP2S27 Photointerrupter or the Siemens SFH9101 Light Reflection Switch can be used as excitation/detection apparatus for the present invention. The LED wavelength and window optical potting (spectral filter characteristics) of these devices can be customized for use with the embodiments of the present invention.

In an exemplary embodiment, a flood LED (FLED) is the preferred light source for charging the tag. A preferred commercially available FLED is product number TLRA 1005 manufactured by Toshiba which is a very bright 660 nm light source. The FLED is high power and has the ability to charge the latent illuminance tag beyond what could be done with an ordinary LED, such as one found in a commercially available photointerrupter. The FLED prevents the problem of the low signal response from the latent illuminance material and high noise content in the detection circuit.

Preferably, the FLED has a very narrow emission band matching the absorption band of the latent illuminance/irradiance tag.

The FLED also has a narrow beam divergence. This narrowly diverging beam significantly reduces the amount of reflected light from the platform elements on which a cartridge is disposed in a disk drive. The LED source in the photointerrupter is a widely diverging light source. The FLED is a very intense light source. It is configured to send out between about 800 and about 1000 mcd of light to a small area on the tag. The LED source in the photointerrupter is on the order of about 10 to about 15 mcd and spreads light over a much larger area.

Thus, in detection of a latent illuminance tag, a narrow well matched frequency band emission is desirable to the function of the latent illuminance material and system circuitry.

A series of different tags (e.g., 10 to 20) can be formulated for a particular user such as a software manufacturer, with each formulation having different latent illuminance materials and therefore different photoluminance decay characteristics. The decomposition and reverse engineering required to reformulate a latent illuminance tag is difficult. In the event that such a security break does occur, however, the software manufacturer can switch to another tag having a different signature. These other signatures would be programmed or encrypted into the drive's firmware as a recognizable latent illuminance tag. Thus, the present invention can be used by a software manufacturer to identify its program disks as being authentic, so that only authorized users could use the software stored on those disks. Alternatively, the latent illuminance/irradiance tags' detection alone or in conjunction with the data store on the cartridge can act as a key mechanism to allow authorized use of the proprietary software. If the appropriate cartridge is not inserted, access to the use of the software is denied.

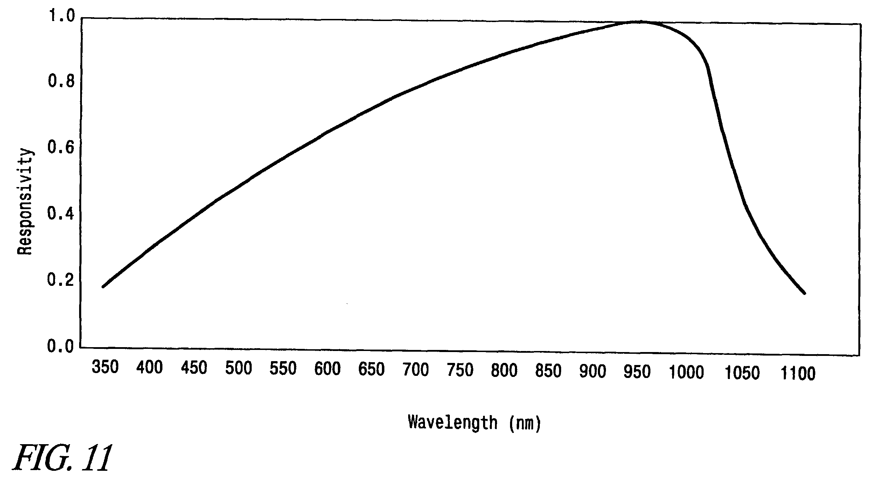

As stated above, it is most preferred that the latent illuminance wavelength be shifted from that of the emitted source (e.g., the source emits at near-IR wavelengths such as about 760 nm). Secondarily, when using a series of different tags, all the tag types' latent illuminance wavelength spectra are within the responsivity window of silicon (about 450 nm to about 1050 nm) and preferably nearer to the peak response of silicon (about 950 nm). At a minimum, the latent illuminance wavelength of the tag types are within the response spectrum of silicon (about 450 nm to about 1050 nm). Fig. 11 shows the spectral responsivity (normalized) of a typical silicon photosensor.

The time constant for different generations of cartridges can be produced by using different material compounds which inherently have different latent illuminance decay rates due to their photoreactive chemistry. An appropriate amount is a large enough increase in the time constant such that the system tolerances can be allowed for in the system and do not cause overlap in the time constant discrimination windows for various cartridge generations. The system is dependent on the exponential decay characteristic of the latent illuminance material and does not vary dependent on the gain or frequency response of the system.

In one embodiment of the present invention, at least three phosphorescent compounds with differing latent illuminance decay constants are used to identify three generations of a product. Table 1 specifies the decay time constant for the three exemplary types of tags. The table also provides numerical time values for the detection window for each type of tag. This table is not intended to be an absolute requirement for materials, but rather an example of a workable set of time constants for the exemplary family of three compounds. It is further preferred that 1) the shortest time constant of the family of compounds is at least about 150 µsec, 2) the longest time constant is less than about 100,000 µsec. 3) the three tags' "system time window of discrimination" (Tmax -Tmin) for the detection system do not overlap, and 4) tolerance on the decay time constant is about +/- 5%.

**Table 1**

| Tag No. | "T" Decay time constant (µsec) | "T" tolerance (± %) | Tmin (µsec) | Tmax (µsec) | ΔT window (µsec) |
|---|---|---|---|---|---|
| 1 | 150 | 5 | 120 | 345 | 225 |
| 2 | 500 | 5 | 400 | 1000 | 600 |
| 3 | 1300 | 5 | 1050 | 2400 | 1350 |

A series of phosphorescent compounds is used which produces a latent illuminance after being illuminated by an LED source having a visible to near-IR wavelength. This family of compounds preferably has a different decay time constant for the latent illuminescence for each of the members of the family. The difference in the decay times is used as a discriminator between a particular member of the family and others and between the particular member and other purely passive light reflectors.

One embodiment in accordance with the present invention incorporates a filter to spectrally filter out the illuminating wavelength at the aperture of the photonic sensor and only transmit the wavelength(s) that are to be emitted by the phosphorescent effect of the tag. This reduces the recovery time required by the photonic sensor to come out of saturation from reflected illuminating wavelengths and makes the system less sensitive to ambient light sources.

In accordance with another embodiment in which a phototransistor or photodiode is used in the disk drive as a detector, a filter is placed on the phototransistor or photodiode in the disk drive so that the latent illuminance material is used to convert light from the visible spectrum (short wavelength light) to the infrared spectrum (long wavelength light). For example, a dyed potting compound, similar to those used to filter the light coming to the remote control input window of a television set, can be used which absorbs light below a certain wavelength, e.g., 680 nm. It is desirable to implement this type of system to eliminate noise detected by the phototransistor or photodiode in the detection system. In other words, the present invention prevents the problem of DC noise bias in a detection system for visible light.

The phototransistor or photodiode has a very broad wavelength excitation range which makes it more difficult to detect specific responses. A filter material to remove the visible (short) wavelength light is placed on the phototransistor or photodiode. This helps absorb any reflected light that results from a short wavelength source used to charge the latent illuminance material (i.e., the reflected light is the light that is not absorbed and converted into long wavelength light). If the latent illuminance material does not convert light from the visible to the infrared spectrum, the light will be absorbed by the filter, thereby preventing the creation of DC bias in the detection circuitry.

Therefore, the latent illuminance material is charged by light in the visible spectrum. The latent illuminance material emits in the infrared spectrum. The phototransistor or photodiode filters the reflected "charging light" and detects only the emitted light from the latent illuminance material in the infrared spectrum. Thus, the phototransistor or photodiode response is improved by minimizing or reducing the emitter load or impedance on the phototransistor or photodiode, thereby improving the aggregate system response to a short time constant latent illuminance material (i.e., a latent illuminance material having a time constant between about 50 µsec and about 3,000 µsec).

In an alternate embodiment, an absorbing material such as a rare earth element or a dye is disposed within the tag to absorb undesired light at certain wavelength or wavelengths. This is desirable to capture light emitted from the light source that would not otherwise be absorbed by the tag. If not absorbed by the tag, this unwanted light would reflect off the tag and be detected by the detector at a certain wavelength or wavelengths, thereby leading to an incorrect identification of the object. For example, a disk drive may interpret light having a wavelength in the range between about 680 and about 800 nm as belonging to the tag associated with a first type of disk, and may interpret light having a wavelength of about 950 nm as belonging to the tag associated with a second type of disk. An absorbing material, such as a rare earth element, can be incorporated into the tag of the first type of disk to absorb light that would not otherwise be absorbed and may reflect at about 950 nm to ensure that the drive will not incorrectly identify the first type of disk as being of the second type.

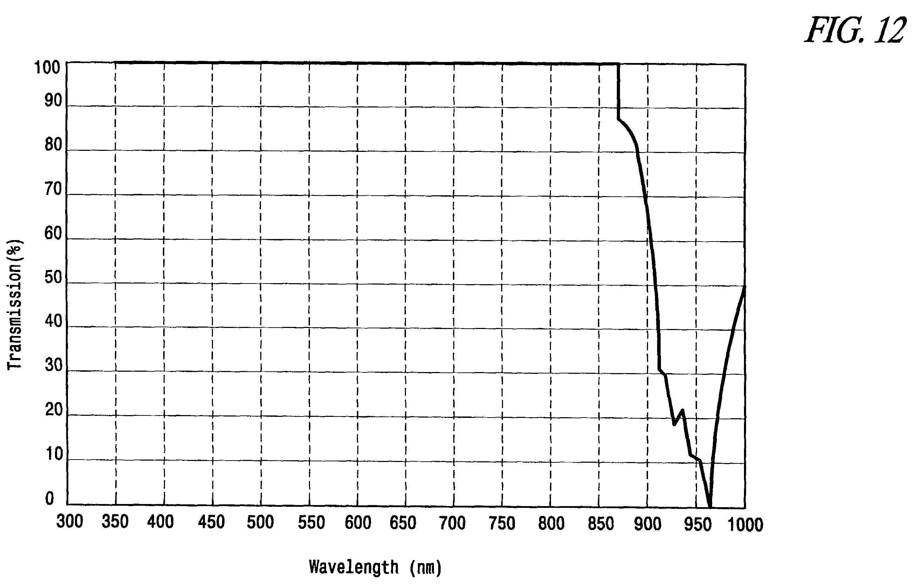

A preferred absorbing material for the latent illuminance tag is ytterbium oxide which has a typical transmission curve as shown in Fig. 12 when embodied in 19% ytterbium oxide phosphate glass. Ytterbium is a rare earth metal which absorbs light having a wavelength of about 950 nm. The absorbed light is turned into heat which dissipates. The filter material can be coated onto the tag or blended with the latent illuminance material. The filter absorbs light at a particular wavelength so that false readings are prevented. Furthermore, the filter material, when coated onto the tag, provides increased abrasion resistance for the tag.

Ytterbium has a very narrow absorption band (about 910 to about 990 nm) which is desirable. The phosphor material re-emits light in the 700-910 nm range. If the filter material absorbed light over a very broad range, it would absorb a great deal of the light produced by the phosphor. This would make the cartridge detection difficult.

Preferably, the filter material is carried in a very matte finish ink binder. Without a tough binder overcoat, the phosphor material could easily be scraped away. The matte finish reduces reflectivity by increasing the light dispersion. The binder for the filter material is also preferably flexible so that the tag does not crack or flake during the assembly process.

Another feature in accordance with the present invention is the use of a filter, preferably a high pass electronic filter or a notch filter, on the detection circuit to filter out ambient light at both DC (sunlight) and 50-60 Hz (electric lights). This prevents noise from affecting the decay signal. Because decay times for the embodiments described above are on the order of approximately hundreds of microseconds (faster than 1 KHz), this type of filtering is straightforward and low cost. Moreover, the excitation light source, the photonic sensor, and the latent illuminance tag detection environment are preferably shielded from ambient light. The above described filters can be incorporated into the system diagram of Fig. 5 as optional element 48.

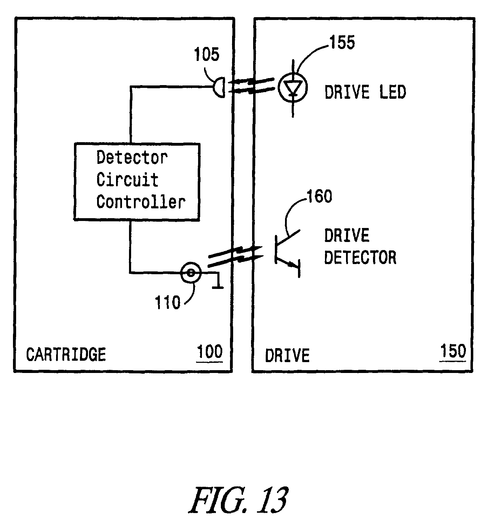

In an alternate embodiment, the action of a latent illuminance tag as described in the above embodiments is simulated by a circuit implemented on a disk or data cartridge as shown in Fig. 13. A photodetector circuit 105 on a disk or data cartridge 100 detects irradiance from a light source 155, such as an LED, on a disk drive 150 and activates a light source 110 such as an LED within the data cartridge 100. The light source 110 emits either a pulse of light set to the detection time constant of the drive detector circuitry 160, or the source 110 outputs an exponentially decaying light that simulates the latent illuminance material used in a latent illuminance tag. In other words, the cartridge LED 110 flashes at the appropriate time for the appropriate duration at the appropriate amplitude(s). Or, when triggered by the drive, the cartridge LED 110 decays from a fixed amplitude to another fixed amplitude over a specific time. Thus, the drive detector circuit 160 will identify the data cartridge to be of the same type as that equipped with the simulated latent illuminance tag and cause the drive to accept the cartridge. The light detector 105, detector circuit controller 107, and light source 110 can be implemented on a single integrated circuit (IC). The IC could be powered by a battery on the data cartridge 100 or by the luminance of the drive 150. It is noted that by appropriate multiple light sources and/or filtering, any and all latent illuminance material configurations described in the above embodiments can be simulated in this manner.

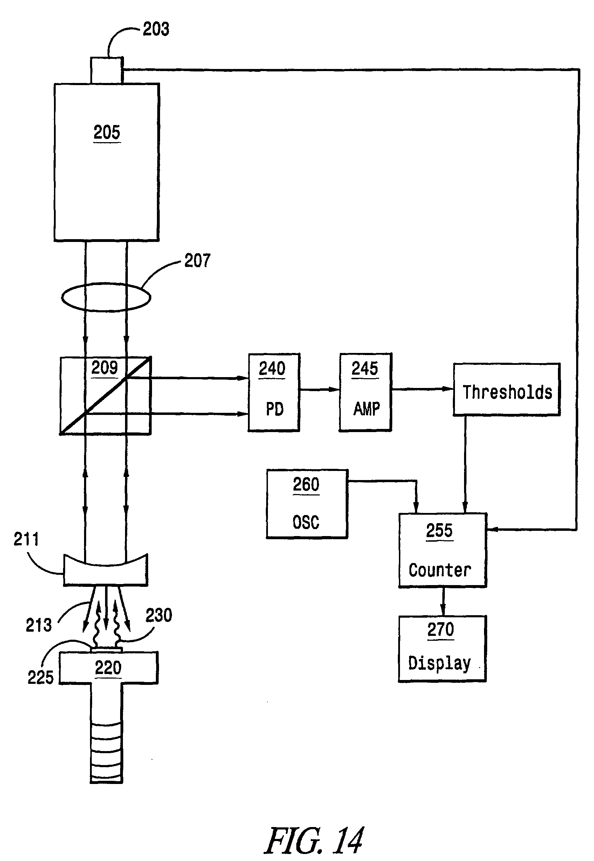

Although the present invention has been described herein with respect to cartridge detection, it can be used in any object detection or discrimination apparatus or application, such as anti-counterfeiting apparatus and applications. Moreover, it can be used in a detection system that uses a timing measurement circuit instead of a microprocessor to determine the decay rate or time constant, thereby validating or authenticating the object. For example, the present invention can also be used to identify and authenticate genuine objects, such as high quality bolts or fasteners, from poorly made imitations. An exemplary detector for authenticating bolts or fasteners is shown in Fig. 14. However, the Fig 14 arrangement does not fall within the scope of the claims. A light source 205, such as a laser, is activated by pushing a button 203. The light source 205 emits irradiance 213 through a collimator 207, a beam splitter 209, and a beam expander 211 (optional) onto the end of the bolt 220 which contains a marker 225. The light source 205 is then turned off, and the marker 225 emits latent irradiance 230 which is detected by detector 240 (e.g., a photodiode). The signal is amplified at an amplifier 245. When the amplitude of the latent irradiance (i.e., the intensity value) is reaches a first threshold, a crystal oscillator 260 is activated and a counter 255 counts the oscillations. When the amplitude falls through a second threshold, the oscillator 260 is deactivated and the counter 255 stops counting. The counter 255 then provides the number of oscillations (or a corresponding time) to a display 270 for display. The user (or a machine if in an automated process) can then determine the decay rate or time constant based on the count or time displayed, and thereby determine if the bolt is authentic or an imitation. In this manner, a microprocessor is not used to determine the decay rate or time constant. The counter 255 is cleared each time the button 203 is pushed. It should be noted that a microprocessor can be used in place of the crystal oscillator timing measurement circuit.

The present invention can be used to identify and authenticate any objects, such as read only disks, write once disks, and disks having particular applications, such as photodisks for digital camera applications, global positioning or map disks, and book disks. Moreover, it is contemplated that the present invention can be used to authenticate automobile, airplane, and ship parts, high-grade chain, integrated circuits and semiconductor chips, and composite / alloy materials. Moreover, airport security systems can use the present invention to identify bags that have passed a security checkpoint or clearance.

The tags are less complex and more economical to manufacture than other types of markers. The tags are highly repeatable and thus provides a manufacturing advantage.

Although the present invention has been described herein with respect to cartridge detection, it can be used in any object detection or discrimination apparatus or application, such as anti-counterfeiting apparatus and applications.

Although illustrated and described herein with reference to certain specific embodiments, the present invention is nevertheless not intended to be limited to the details shown. Rather, various modifications may be made in the details within the scope of the claims and without departing from the invention.

## Claims

1. A method for checking the authenticity of an object (10) having a marker (20) comprising a phosphorescent material, with the property that it emits irradiance having a latent illuminance decay time, a latent wavelength illuminance spectrum in the range between about 450 nm and about 1050 nm, and an intensity that decays one of exponentially and as the sum of a plurality of differently weighted exponential decays when irradiated with a source of irradiance, comprising:
irradiating said marker with a source of irradiance (34);
detecting irradiance emitted from said marker;
determining a first amount of time for said detected irradiance to decay from a first intensity value to a second intensity value;
determining a second amount of time for said detected irradiance to decay from a third intensity value to a fourth intensity value;
determining whether said object is genuine based on said first amount of time and said second amount of time.

2. The method of claim 1, wherein said source of irradiance has an irradiance wavelength outside of said latent illuminance wavelength spectrum.

3. The method of claim 1 or 2, wherein said object is determined to be genuine if said first amount of time is substantially equal to said second amount of time.

4. The method of claim 1, 2 or 3, wherein said intensity of said irradiance decays according to e^{-(t/(T/X))}, where T is a decay time constant for a predetermined amount of decay, X is a predetermined constant, and t is a time that has elapsed from when said source of irradiance stops providing said irradiance.

5. An apparatus for checking an object (10), which object is provided with a marker (20) comprising a phosphorescent material, with the property that it emits irradiance having a latent wavelength illuminance spectrum in the range between about 450 nm and about 1050 nm and has a latent illuminance decay time, and an intensity that decays one of exponentially and as the sum of a plurality of differently weighted exponential decays when irradiated with a source of irradiance, the apparatus comprising:
a source of irradiance (34) for irradiating said marker;
a detector of irradiance (36) for detecting irradiance emitted from said marker; and
means (44) for monitoring the output of said detector of irradiance, determining a first amount of time for said detected irradiance to decay from a first intensity value to a second intensity value, determining a second amount of time for said detected irradiance to decay from a third intensity value to a fourth intensity value, and determining whether said object is genuine based on said first amount of time and said second amount of time.

6. The apparatus of claim 5, wherein said source of irradiance (34) is one of a light emitting diode (LED) and a laser.

7. The apparatus of claim 5 or 6, wherein said detector of irradiance (36) is one of a phototransistor and a photodiode.

8. The apparatus of claim 5, 6 or 7, wherein said means for monitoring (44) and determining comprises one of a microprocessor and a timing measurement circuit, and said object is determined to be genuine if said first amount of time is substantially equal to said second amount of time.

9. The apparatus of claim 8, wherein said timing measurement circuit comprises a crystal oscillator monitor having a counter which is triggered on and off by a plurality of intensity level thresholds.

10. The apparatus of one of claims 5 to 9, further comprising a filter (48) for filtering irradiance of at least one predetermined wavelength band from entering said detector.

11. The apparatus of one of claims 5 to 10, further comprising:
a plurality of sources of irradiance to emit irradiance at a first plurality of wavelength bands; and
a plurality of detectors of irradiance to detect irradiance at a second plurality of wavelength bands, whereby detection of particular ones of said second plurality of wavelength bands identifies a type of object.

12. The combination of an optical reader for detecting a marker (20) on an object (10), and the object for the optical reader, said optical reader comprising:
a source of irradiance (34) at an irradiance wavelength;
a detector of irradiance (36); and
means for monitoring (44) said detected irradiance, determining a first amount of time for said detected irradiance to decay from a first intensity value to a second intensity value, determining a second amount of time for said detected irradiance to decay from a third intensity value to a fourth intensity value, and determining whether said object is genuine based on said first amount of time and said second amount of time, said object being provided with said marker comprising a phosphorescent material, with the property that it emits irradiance having a latent wavelength illuminance spectrum in the range between about 450 nm and about 1050 nm and an intensity that decays one of exponentially and as the sum of a plurality of differently weighted exponential decays when irradiated with a source of irradiance.

13. The combination of claim 12, wherein said source of irradiance (34) is one of a light emitting diode (LED) and a laser.

14. The combination of claim 12 or 13, wherein said detector is one of a phototransistor and a photodiode.

15. The combination of claim 12, 13 or 14, wherein said means (44) for monitoring and determining comprises one of a microprocessor and a timing measurement circuit.

16. The combination of claim 12, 13, 14 or 15, further comprising a filter (48) for filtering irradiance of at least one predetermined wavelength from entering said detector.

17. The combination of one of claims 12 to 16, wherein said marker (20) is an indicator of whether said object is correct and compatible for use in said optical reader.

18. The combination of one of claims 12 to 17, further comprising:
a plurality of sources of irradiance to emit irradiance at a first plurality of wavelengths; and
a plurality of detectors of irradiance to detect irradiance at a second plurality of wavelengths, whereby detection of particular ones of said second plurality of wavelengths having associated ratiometric relationships identifies a type of object.

19. The combination of one of claims 12 to 18, wherein said irradiance wavelength is outside of said latent illuminance wavelength spectrum.

20. The combination of one of claims 12 to 19, wherein said first amount of time and said second amount of time are each in the range between about 50 µsec and about 1 sec.

21. The combination of one of claims 12 to 20, wherein said object is determined to be genuine if said first amount of time is substantially equal to said second amount of time.

22. The combination of one of claims 12 to 21, wherein said intensity of said irradiance decays according to e^{-(t/(T/X))}, where T is a decay time constant for a predetermined amount of decay, X is a predetermined constant, and t is a time that has elapsed from when said source of irradiance stops providing said irradiance.

23. The combination of one of claims 12 to 22, wherein said rare earth phosphorescent material is one of coated on a pressure sensitive sticker substrate, blended with an ink and printed on said object, injection molded on said object, and suspended in a curable adhesive compound.

24. The combination of one of claims 12 to 23, wherein said marker further comprises a filter to absorb light having a predetermined range of wavelengths.

25. The combination of claim 24, wherein said filter comprises a rare earth element.

26. The combination of an optical reader for detecting a marker (20) on an object (10) and the object (10) for the optical reader, said optical reader comprising:
a source of irradiance (34) at an irradiance wavelength;
a detector of irradiance (36); and
means (44) for monitoring said detected irradiance, determining a first amount of time for said detected irradiance to decay from a first intensity value to a second intensity value, determining a second amount of time for said detected irradiance to decay from a third intensity value to a fourth intensity value, and determining whether said object is genuine based on said first amount of time and said second amount of time,
said object comprising:
means (105) for detecting said irradiance from said source of irradiance; and
means (110) for emitting irradiance, having an intensity that decays one of exponentially and as the sum of a plurality of differently weighted exponential decays, toward said detector (36) when said irradiance is detected from said source of irradiance (34) by said means for detecting (105).

27. The combination of claim 26, wherein said source of irradiance (34) is an LED and said detector is one of a phototransistor and a photodiode.

28. The combination of claim 26 or 27, wherein said means (44) for monitoring and determining comprises one of a microprocessor and a timing measurement circuit, and said object is determined to be genuine if said first amount of time is substantially equal to said second amount of time.

29. The combination of claim 26, 27 or 28, further comprising a filter (48) for filtering irradiance of at least one predetermined wavelength from entering said detector.

30. The combination of one of claims 26 to 29, wherein said means for detecting said irradiance from said source of irradiance comprises a photodetector (105) on said object for detecting said irradiance from said source of irradiance, and said means for emitting decaying irradiance comprises a light source (110) on said object and electrically connected to said photodetector.

31. The combination of claim 30, wherein said light source is one of an LED and a laser.

32. The combination of claim 30 or 31, wherein said photodetector and said light source are disposed on an integrated circuit.

33. The combination of claim 32, wherein said integrated circuit is powered by one of a battery and said source of irradiance.

## Patentansprüche

1. Verfahren für die Überprüfung der Authentizität eines Objektes (10), welches einen Marker (20) hat, der ein phosphoreszierendes Material umfasst, mit der Eigenschaft, dass dieses eine Strahlung aussendet, die eine latente Illuminanzverfallszeit hat, ein latentes Wellenlängenilluminanzspektrum in der Spanne zwischen ungefähr 450 nm und ungefähr 1050 nm, und eine Intensität, die entweder exponentiell abfällt oder als die Summe einer Mehrheit von unterschiedlich gewichteten exponentiellen Abfällen, wenn sie mit einer Strahlungsquelle bestrahlt wird, umfassend:
Bestrahlen des Markers mit einer Strahlungsquelle (34);
Erfassen der Strahlung, welche von dem Marker abgestrahlt wird;
Bestimmen einer ersten Zeitspanne, in welcher die erfasste Strahlung von einem ersten Intensitätswert auf einen zweiten Intensitätswert abfällt;
Bestimmen einer zweiten Zeitspanne, in welcher die erfasste Strahlung von einem dritten Intensitätswert auf einen vierten Intensitätswert abfällt;
Bestimmen, ob das Objekt echt ist, basierend auf den ersten und zweiten Zeitspannen.

2. Verfahren nach Anspruch 1, wobei die Strahlungsquelle eine Strahlungswellenlänge außerhalb des latenten Wellenlängenspektrums der Lichtilluminanz besitzt.

3. Verfahren nach den Ansprüchen 1 oder 2, wobei das Objekt als echt festgestellt wird, wenn die erste Zeitspanne im Wesentlichen der zweiten Zeitspanne gleicht.

4. Verfahren nach den Ansprüchen 1, 2 oder 3, wobei die Intensität der Strahlung g^{-(t/(T/X))} abfällt, wobei T eine Abfallszeitkonstante für ein vorbestimmtes Ausmaß an Abfall darstellt, X ist eine vorbestimmte Konstante und t ist eine Zeit, die verstrichen ist, ab dem Zeitpunkt, wenn die Strahlenquelle aufhört, die Strahlung auszusenden.

5. Vorrichtung für die Überprüfung eines Objektes (10), welches mit einem Marker (20) ausgestattet ist, umfassend ein phosphoreszierendes Material, mit der Eigenschaft, dass es Strahlung aussendet, welche ein latentes Wellenlängenlichtilluminanzspektrum in dem Bereich zwischen ungefähr 450 nm und ungefähr 1050 nm besitzt und eine latente Illuminanzverfallszeit besitzt und aufweist, die entweder exponentiell abfällt oder die Summe einer Mehrheit von unterschiedlich gewichteten exponentiellen Abfällen, wenn sie mit einer Strahlungsquelle bestrahlt wird, wobei die Vorrichtung umfasst:
eine Strahlungsquelle (34) für die Bestrahlung des Markers;
einen Detektor für die Strahlung (36) zur Erfassung der Strahlung, welche von der Markierung ausgesendet wird;
eine Vorrichtung (44) für die Aufzeichnung der Ausgabe des Strahlungsdetektors,
die Bestimmung einer ersten Zeitspanne, in welcher die erfasste Strahlung von einem ersten Intensitätswert auf einen zweiten Intensitätswert abfällt, die Bestimmung einer zweiten Zeitspanne, in welcher die erfasste Strahlung von einem dritten Intensitätswert auf einen vierten Intensitätswert abfällt und die Bestimmung, ob das Objekt echt ist, basierend auf der ersten Zeitspanne und der zweiten Zeitspanne basiert.

6. Vorrichtung nach Anspruch 5, wobei die Strahlungsquelle (34) entweder eine Licht emittierende Diode (LED) oder ein Laser ist.

7. Vorrichtung nach den Ansprüchen 5 oder 6, wobei der Strahlungsdetektor (36) entweder ein Phototransistor oder eine Photodiode ist.

8. Vorrichtung nach Anspruch 5, 6 oder 7, wobei die Einrichtung für die Aufzeichnung (44) und Bestimmung entweder einen Mikroprozessor oder eine Zeitmessschaltung umfasst, und das Objekt als echt festgestellt wird, wenn die erste Zeitspanne im wesentlichen der zweiten Zeitspanne gleicht.

9. Vorrichtung nach Anspruch 8, wobei die Zeitmessschaltung einen Kristalloszillatormonitor umfasst, welcher einen Zähler besitzt, der durch eine Mehrheit von Intensitätsschwellenwerte ein- und ausgeschaltet wird.

10. Vorrichtung nach einem der Ansprüche 5 bis 9, der weiterhin einen Filter (48) für die Filterung der Strahlung von zumindest einem vorbestimmten Wellenlängenband davor, in den Detektor zu gelangen, umfasst.

11. Vorrichtung nach einem der Ansprüche 5 bis 10, weiterhin umfassend:
eine Mehrheit von Strahlungsquellen, um Strahlung in einer ersten Mehrheit von Wellenlängenbändern auszustrahlen; und
eine Mehrheit von Strahlungsdetektoren, um die Strahlung an einer zweiten Mehrheit von Wellenlängenbändern zu erfassen, wodurch die Erfassung einer spezifischen der zweiten Mehrheit von Wellenlängenbändem den Typ eines Objektes identifiziert.

12. Kombination eines optischen Lesers für die Erkennung eines Markers (20) auf einem Objekt (10), und das Objekt für den optischen Leser, wobei der optische Leser umfasst:
eine Strahlenquelle (34) bei einer Strahlungswellenlänge;
ein Strahlungsdetektor (36); und
eine Einrichtung für die Aufzeichnung (44) der erfassten Strahlung, die Bestimmung einer ersten Zeitspanne in welcher die erfasste Strahlung von einem ersten Intensitätswert auf einen zweiten Intensitätswert abnimmt, die Bestimmung einer zweiten Zeitspanne, in der die erfasste Strahlung von einem dritten Intensitätswert auf einen vierten Intensitätswert abnimmt, und die Bestimmung, ob das Objekt echt ist, basierend auf der ersten Zeitspanne und der zweiten Zeitspanne, wobei das Objekt mit dem Marker ausgestattet ist, der ein phosphoreszierendes Material umfasst, mit der Eigenschaft, dass es Strahlung abstrahlt, die ein latentes Wellenlängenilluminationsspektrum in dem Bereich zwischen ungefähr 450 nm und ungefähr 1050 nm und einer Intensität, die entweder exponentiell oder als die Summe einer Mehrheit von unterschiedlich gewichteten exponentiellen Abfällen abfällt, wenn sie mit einer Strahlungsquelle bestrahlt wird.

13. Kombination aus Anspruch 12, wobei die Strahlungsquelle (34) entweder eine Licht emittierende Diode (LED) oder ein Laser ist.

14. Kombination aus Anspruch 12 oder 13, wobei der Detektor entweder ein Phototransistor oder eine Photodiode ist.

15. Kombination aus den Ansprüchen 12, 13 oder 14, wobei die Vorrichtung (44) für die Aufzeichnung und Bestimmung entweder einen Mikroprozessor oder eine Zeitmessschaltung enthält.

16. Kombination der Ansprüche 12, 13, 14 oder 15, die weiterhin einen Filter (48) enthält, mit dem Strahlung von zumindest einer vorher bestimmten Wellenlänge vor dem Eintritt in den Detektor gefiltert wird.

17. Kombination aus einem der Ansprüche 12 bis 16, wobei der Marker (20) ein Indikator dafür ist, ob das Objekt richtig und kompatibel zu der Benutzung in dem optischen Leser ist.

18. Kombination nach einem der Ansprüche 12 bis 17, weiterhin umfassend:
eine Mehrheit von Strahlungsquellen, die Strahlung einer ersten Mehrheit von Wellenlängen emittiert; und
eine Mehrheit von Strahlungsdetektoren, um die Strahlung einer zweiten Mehrheit von Wellenlängen zu erfassen, wobei die Erfassung von speziellen der zweiten Mehrheit von Wellenlängen, die eine zugeordnete radiometrische Beziehung aufweisen, den Typ eines Objekts identifiziert.

19. Kombination nach einem der Ansprüche 12 bis 18, wobei die Strahlungswellenlänge außerhalb des latenten Illuminanzwellenspektrums liegt.

20. Kombination nach einem der Ansprüche 12 bis 19, wobei die erste Zeitspanne und die zweite Zeitspanne jeweils in einem Bereich zwischen ungefähr 50 µsec und ungefähr 1 sec liegen.

21. Kombination nach einem der Ansprüche 12 bis 20, wobei das Objekt als echt bestimmt wird, wenn die erste Zeitspanne im wesentlichen der zweiten Zeitspanne gleicht.

22. Kombination nach einem der Ansprüche 12 bis 21, wobei die Intensität der Strahlung gemäß e^{-(t/(T/X))} abfällt, wobei T eine Abfallzeitkonstante für die vorbestimmte Abfallmenge ist, X, eine vorbestimmte Konstante und t die Zeit ist, die verstrichen ist, ab dem Zeitpunkt, wenn die Strahlenquelle aufhört die Strahlung zur Verfügung zu stellen.

23. Kombination nach einem der Ansprüche 12 bis 22, wobei das phosphoreszierende seltene Erden Material entweder auf ein drucksensitives Stickersubstrat aufgetragen ist, mit einer Tinte vermischt und auf das Objekt gedruckt ist, auf dem Objekt eingespritzt ist, oder in einem aushärtbaren, adhäsiven Gemisch aufgelöst ist.

24. Kombination nach einem der Ansprüche 12 bis 23, wobei der Marker weiterhin einen Filter enthält, um Licht zu absorbieren, das einen vorbestimmten Bereich von Wellenlängen hat.

25. Kombination nach Anspruch 24, wobei der Filter eine seltene Erden Element umfasst.

26. Kombination aus einem optischen Leser für die Erfassung eines Markers (20) an einem Objekt (10) und einem Objekt (10) für den optischen Leser, wobei der optische Leser umfasst:
eine Strahlungsquelle (34) mit einer Strahlungswellenlänge;
einen Strahlungsdetektor (36); und
eine Vorrichtung (44) für die Aufzeichnung der erfassten Strahlung, die Bestimmung einer ersten Zeitspanne, in der die erfasste Strahlung von einem ersten Intensitätswert auf einen zweiten Intensitätswert abfällt, die Bestimmung einer zweiten Zeitspanne, in der die erfasste Strahlung von einem dritten Intensitätswert auf einen vierten Intensitätswert abfällt, sowie die Bestimmung, ob das Objekt echt ist, basierend auf der ersten Zeitspanne und der zweiten Zeitspanne,
wobei das Objekt umfasst:
eine Einrichtung (105) für die Erfassung der Strahlung der Strahlenquelle; und
eine Einrichtung (110) für das Emittieren von Strahlung, die eine Intensität besitzt, die entweder exponentiell abfällt oder als die Summe einer Mehrheit von unterschiedlich gewichteten exponentiellen Verfallen abfällt, hin zu dem Detektor (36), wenn die Strahlung von der Strahlenquelle (34) durch die Vorrichtung zur Erfassung (105) erfasst wird.

27. Kombination nach Anspruch 26, wobei die Strahlenquelle (34) eine LED ist und der Detektor entweder ein Phototransistor oder eine Photodiode ist.

28. Kombination nach Ansprüchen 26 oder 27, wobei die Einrichtung (44) für die Aufzeichnung und Bestimmung entweder einen Mikroprozessor oder eine Zeitmessschaltung enthält, und das Objekt als echt festgestellt wird, wenn die erste Zeitspanne im wesentlichen der zweiten Zeitspanne gleicht.

29. Kombination nach Anspruch 26, 27 oder 28, weiterhin umfassend einen Filter (48) für die Herausfilterung von Strahlung von zumindest einer vorbestimmten Wellenlänge vor dem Eindringen in den Detektor.

30. Kombination nach einem der Ansprüche 26 bis 29, wobei die Einrichtung für die Erfassung der Strahlung von der Strahlenquelle einen Photodetektor (105) an dem Objekt für die Erfassung der Strahlung von der Strahlenquelle enthält und die Einrichtung für die Ausstrahlung der abfallenden Strahlung eine Lichtquelle (110) an dem Objekt enthält und elektrisch mit dem Photodetektor verbunden ist.

31. Kombination nach Anspruch 30, wobei die Lichtquelle entweder eine LED oder ein Laser ist.

32. Kombination nach Anspruch 30 oder 31, wobei der Photodetektor und die Lichtquelle an einer integrierten Schaltung angeordnet sind.

33. Kombination nach Anspruch 32, wobei die integrierte Schaltung entweder durch eine Batterie oder die Strahlungsquelle angetrieben wird.

## Revendications

1. Un procédé pour vérifier l'authenticité d'un objet (10) comportant un marqueur (20) comprenant un matériau phosphorescent, avec la propriété d'émettre un rayonnement ayant un temps de diminution d'éclairement lumineux latent, un spectre de longueurs d'onde d'éclairement lumineux latent dans la plage comprise entre environ 450 nm et environ 1050 nm, et une intensité qui diminue soit exponentiellement soit comme la somme d'une pluralité de diminutions exponentielles pondérées différemment lors d'une irradiation par une source de rayonnement, comprenant :
l'irradiation dudit marqueur par une source de rayonnement (34) ;
la détection du rayonnement émis par ledit marqueur ;
la détermination d'une première quantité de temps pour que ledit rayonnement détecté diminue d'une première valeur d'intensité à une deuxième valeur d'intensité ;
la détermination d'une deuxième quantité de temps pour que ledit rayonnement détecté diminue d'une troisième valeur d'intensité à une quatrième valeur d'intensité ;
la détermination du fait que ledit objet est authentique sur la base de ladite première quantité de temps et de ladite deuxième quantité de temps.

2. Le procédé selon la revendication 1, dans lequel ladite source de rayonnement à une longueur d'onde de rayonnement en dehors dudit spectre de longueurs d'onde d'éclairement lumineux latent.

3. Le procédé selon la revendication 1 ou 2, dans lequel ledit objet est déterminé comme étant authentique si ladite première quantité de temps est sensiblement égale à ladite deuxième quantité de temps.

4. Le procédé selon la revendication 1, 2 ou 3, dans lequel ladite intensité dudit éclairement lumineux diminue conformément à e^{-(t/(T/X))}, où T est une constante de temps de diminution pour une quantité prédéterminée de diminution, X est une constante prédéterminée et t est un temps qui s'est écoulé depuis le moment où ladite source de rayonnement a cessé d'appliquer ledit rayonnement.

5. Un dispositif de vérification d'un objet (10), lequel objet est pourvu d'un marqueur (20) comprenant un matériau phosphorescent, avec la propriété d'émettre un rayonnement ayant un spectre de longueurs d'onde d'éclairement lumineux latent dans la plage comprise entre environ 450 nm et environ 1050 nm et a un temps de diminution d'éclairement lumineux latent, et une intensité qui diminue soit exponentiellement soit comme la somme d'une pluralité de diminutions exponentielles pondérées différemment lors d'une irradiation par une source de rayonnement, le dispositif comprenant :
une source de rayonnement (34) pour irradier ledit marqueur ;
un détecteur de rayonnement (36) pour détecter un rayonnement émis par ledit marqueur ;
des moyens (44) pour surveiller la sortie dudit détecteur de rayonnement, déterminer une première quantité de temps pour que ledit rayonnement détecté diminue d'une première valeur d'intensité à une deuxième valeur d'intensité, déterminer une deuxième quantité de temps pour que ledit rayonnement détecté diminue d'une troisième valeur d'intensité à une quatrième valeur d'intensité, et déterminer si ledit objet est authentique sur la base de ladite première quantité de temps et de ladite deuxième quantité de temps.

6. Le dispositif selon la revendication 5, dans lequel ladite source de rayonnement (34) est soit une diode électroluminescente soit un laser.

7. Le dispositif selon la revendication 5 ou 6, dans lequel ledit détecteur de rayonnement (36) est soit un phototransistor soit une photodiode.

8. Le dispositif selon la revendication 5, 6 ou 7, dans lequel lesdits moyens pour surveiller (44) et pour déterminer comprennent soit un microprocesseur soit un circuit de mesure de temps, et ledit objet est déterminé comme étant authentique si ladite première quantité de temps est sensiblement égale à ladite deuxième quantité de temps.

9. Le dispositif selon la revendication 8, dans lequel ledit circuit de mesure de synchronisation comprend un dispositif de surveillance d'oscillateur à quartz comportant un compteur qui est démarré et arrêté par une pluralité de niveaux de seuil d'intensité.

10. Le dispositif selon l'une des revendications 5 à 9, comprenant en outre un filtre (48) pour empêcher un rayonnement d'au moins une bande de longueurs d'onde prédéterminée de pénétrer dans ledit détecteur.

11. Le dispositif selon l'une des revendications 5 à 10, comprenant en outre :
une pluralité de sources de rayonnement pour émettre un rayonnement dans une première pluralité de bandes de longueurs d'onde ; et
une pluralité de détecteurs de rayonnement pour détecter un rayonnement dans une deuxième pluralité de bandes de longueurs d'onde, de telle manière que la détection de bandes particulières de ladite deuxième pluralité de bandes de longueurs d'onde identifie un type d'objet.

12. La combinaison d'un dispositif de lecture optique pour détecter un marqueur (20) sur un objet (10) et de l'objet pour le dispositif de lecture optique, le dispositif de lecture optique comprenant :
une source de rayonnement (34) à une longueur d'onde de rayonnement ;
un détecteur de rayonnement (36) ; et
des moyens pour surveiller (44) ledit rayonnement détecté, déterminer une première quantité de temps pour que ledit rayonnement détecté diminue d'une première valeur d'intensité à une deuxième valeur d'intensité, déterminer une deuxième quantité de temps pour que ledit rayonnement détecté diminue d'une troisième valeur d'intensité à une quatrième valeur d'intensité, et déterminer si ledit objet est authentique sur la base de ladite première quantité de temps et de ladite deuxième quantité de temps, ledit objet étant pourvu dudit marqueur comprenant un matériau phosphorescent, avec la propriété d'émettre un rayonnement ayant un spectre de longueurs d'onde d'éclairement lumineux latent dans la plage comprise entre environ 450 nm et environ 1050 nm et une intensité qui diminue soit exponentiellement soit comme la somme d'une pluralité de diminutions exponentielles pondérées différemment lors d'une irradiation par une source de rayonnement.

13. La combinaison selon la revendication 12, dans laquelle ladite source de rayonnement (34) est soit une diode électroluminescente soit un laser.

14. La combinaison selon la revendication 12 ou 13, dans laquelle ledit détecteur est soit un phototransistor soit une photodiode.

15. La combinaison selon la revendication 12, 13 ou 14, dans laquelle lesdits moyens (44) pour surveiller et déterminer comprennent soit un microprocesseur soit un circuit de mesure de temps.

16. La combinaison selon la revendication 12, 13, 14 ou 15, comprenant en outre un filtre (48) pour empêcher un rayonnement d'au moins une longueur d'onde prédéterminée de pénétrer dans ledit détecteur.

17. La combinaison selon l'une des revendications 12 à 16, dans laquelle ledit marqueur (20) est un indicateur du fait que ledit objet est correct et compatible pour une utilisation dans ledit dispositif de lecture optique.

18. La combinaison selon l'une des revendications 12 à 17, comprenant en outre:
une pluralité de sources de rayonnement pour émettre un rayonnement à une première pluralité de longueurs d'onde ; et
une pluralité de détecteurs de rayonnement pour détecter un rayonnement à une deuxième pluralité de longueurs d'onde, de telle manière qu'une détection de longueurs d'onde particulières de ladite deuxième pluralité de longueurs d'onde ayant des relations ratiométriques associées identifie un type d'objet.

19. La combinaison selon l'une des revendications 12 à 18, dans laquelle ladite longueur d'onde de rayonnement est en dehors dudit spectre de longueurs d'onde d'éclairement lumineux latent.

20. La combinaison selon l'une des revendications 12 à 19, dans laquelle ladite première quantité de temps et ladite deuxième quantité de temps sont chacune dans la plage comprise entre environ 50 µs et environ 1 s.

21. La combinaison selon l'une des revendications 12 à 20, dans laquelle ledit objet est déterminé comme étant authentique si ladite première quantité de temps est sensiblement égale à ladite deuxième quantité de temps.

22. La combinaison selon l'une des revendications 12 à 21, dans laquelle ladite intensité dudit rayonnement diminue conformément à e^{-(t/(T/X))}, où T est une constante de temps de diminution pour une quantité de diminution prédéterminée, X est une constante prédéterminée, et t est un temps qui s'est écoulé depuis le moment où ladite source de rayonnement a cessé d'appliquer ledit rayonnement.

23. La combinaison selon l'une des revendications 12 à 22, dans laquelle ledit matériau phosphorescent de terres rares est un matériau déposé sur un substrat autocollant, mélangé à une encre et imprimé sur ledit objet, moulé par injection sur ledit objet, ou en suspension dans un composé adhésifpolymérisable.

24. La combinaison selon l'une des revendications 12 à 23, dans laquelle ledit marqueur comprend, en outre, un filtre afin d'absorber une lumière ayant une plage prédéterminée de longueurs d'onde.

25. La combinaison selon la revendication 24, dans laquelle ledit filtre comprend un élément de terres rares.

26. La combinaison d'un dispositif de lecture optique pour détecter un marqueur (20) sur un objet (10) et de l'objet (10) pour le dispositif de lecture optique, ledit dispositif de lecture optique comprenant :
une source de rayonnement (34) à une longueur d'onde de rayonnement ;
un détecteur de rayonnement (36) ; et
des moyens (44) pour surveiller ledit rayonnement détecté, déterminer une première quantité de temps pour que ledit rayonnement détecté diminue d'une première valeur d'intensité à une deuxième valeur d'intensité, déterminer une deuxième quantité de temps pour que ledit rayonnement détecté diminue d'une troisième valeur d'intensité à une quatrième valeur d'intensité, et déterminer si ledit objet est authentique sur la base de ladite première quantité de temps et de ladite deuxième quantité de temps,
ledit objet comprenant :
des moyens (105) pour détecter ledit rayonnement provenant de ladite source de rayonnement ; et
des moyens (110) pour émettre un rayonnement, ayant une intensité qui diminue soit exponentiellement soit comme la somme d'une pluralité de-diminutions exponentielles pondérées différemment, vers ledit détecteur (36) lorsque ledit rayonnement est détecté par ladite source de rayonnement (34), par lesdits moyens de détection (105).

27. La combinaison selon la revendication 26, dans laquelle ladite source de rayonnement (34) est une diode électroluminescente et ledit détecteur est soit un phototransistor soit une photodiode.

28. La combinaison selon la revendication 26 ou 27, dans laquelle lesdits moyens (44) pour surveiller et déterminer comprennent soit un microprocesseur soit un circuit de mesure de temps, et ledit objet est déterminé comme étant authentique si ladite première quantité de temps est sensiblement égale à ladite deuxième quantité de temps.

29. La combinaison selon la revendication 26, 27 ou 28, comprenant en outre un filtre (48) pour empêcher un rayonnement d'au moins une longueur d'onde prédéterminée de pénétrer dans ledit détecteur.

30. La combinaison selon l'une des revendications 26 à 29, dans laquelle lesdits moyens pour détecter ledit rayonnement provenant de ladite source de rayonnement comprennent un photodétecteur (105) sur ledit objet pour détecter ledit rayonnement provenant de ladite source de rayonnement, et lesdits moyens pour émettre le rayonnement qui diminue comprennent une source de lumière (110) sur ledit objet et connectée électriquement audit photodétecteur.

31. La combinaison selon la revendication 30, dans laquelle ladite source de lumière est soit une diode électroluminescente soit un laser.

32. La combinaison selon la revendication 30 ou 31, dans laquelle ledit photodétecteur et ladite source de lumière sont disposés sur un circuit intégré.

33. La combinaison selon la revendication 32, dans laquelle ledit circuit intégré est alimenté soit par une batterie soit par ladite source de rayonnement.
